# FASCICULE DE BREVET EUROPEEN

(11) **EP 2 228 423 B1**
(45) Date de publication et mention de la délivrance du brevet: **08.02.2012**
(21) Numéro de dépôt: 10290079.2
(22) Date de dépôt: 17.02.2010
(51) Int. Cl.: C11C 3/12, C11C 3/00, B01J 23/883, B01J 29/74, C10G 3/00, C10G 45/64, C10G 45/08

(54) **Procédé d'hydrodesoxygenation d'huiles ou de graisses avec conversion limitée en decarboxylation mettant en oeuvre un catalyseur hétérogène**
Hydrodesoxigenationsverfahren von Ölen oder Fetten mit begrenzter Umwandlung in Decarboxylierung mittels Einsatz eines heterogenen Katalysators
Method for hydrodeoxygenation of oils or fats with limited conversion to decarboxylation with an heterogeneous catalyst

(30) Priorité: 10.03.2009 FR 0901081
(43) Date de publication de la demande: 15.09.2010
(73) Titulaire: IFP Energies nouvelles, 92852 Rueil-Malmaison Cedex (FR)
(72) Inventeur: Daudin, Antoine, 69008 Lyon (FR); Bournay, Laurent, 69440 Chaussan (FR); Chapus, Thierry, 69001 Lyon (FR)

(56) Documents cités:
- EP-A- 1 396 531
- WO-A-2006/100584
- WO-A-2007/141293
- WO-A-2008/058664
- FR-A- 2 843 050
- FR-A- 2 917 423
- SENOL O I ET AL: "Hydrodeoxygenation of methyl esters on sulphided NiMo/gamma-Al2O3 and CoMo/gamma-Al2O3 catalysts" CATALYSIS TODAY, ELSEVIER, vol. 100, no. 3-4, 28 février 2005 (2005-02-28), pages 331-335, XP004850034 ISSN: 0920-5861

## Description

### Domaine de l'invention

Le contexte international des années 2005-2010 est marqué d'abord par la croissance rapide en besoin de carburants, en particulier de bases gazoles dans la communauté européenne et ensuite par l'importance des problématiques liées au réchauffement planétaire et l'émission de gaz à effet de serre. Il en résulte une volonté de réduire la dépendance énergétique vis à vis des matières premières d'origine fossile et de réduction des émissions de CO₂. Dans ce contexte, la recherche de nouvelles charges issues de sources renouvelables et pouvant être facilement intégrées au schéma traditionnel du raffinage et de la production de carburants constitue un enjeu d'une importance croissante.

A ce titre, l'intégration dans le processus de raffinage de nouveaux produits d'origine végétale, issus de la conversion de la biomasse lignocellulosique ou issus de la production d'huiles végétales ou de graisses animales, a connu ces dernières années un très vif regain d'intérêt en raison de l'augmentation du coût des matières fossiles. De même, les biocarburants traditionnels (éthanol ou esters méthyliques d'huiles végétales principalement) ont acquis un réel statut de complément aux bases pétrolières dans les pools carburants.

La forte demande en carburants gazoles, couplée avec l'importance des préoccupations liées à l'environnement renforce l'intérêt d'utiliser des charges issues de sources renouvelables. Parmi ces charges, on peut citer par exemple les huiles végétales (alimentaires ou non) ou issues d'algues, les graisses animales ou les huiles de fritures usagées, brutes ou ayant subi un traitement préalable, ainsi que les mélanges de telles charges. Ces charges contiennent essentiellement des structures chimiques de type triglycérides que l'homme du métier connait également sous l'appellation tri ester d'acides gras ainsi que des acides gras.

La masse moléculaire très élevée (supérieure à 600 g/mol) des triglycérides et la viscosité élevée des charges considérées font que leur utilisation directe ou en mélange dans les gazoles posent des difficultés pour les moteurs modernes de type HDI (compatibilité avec les pompes d'injection à très haute pression, problème d'encrassement des injecteurs, combustion non maîtrisée, rendement faibles, émissions d'imbrûlés toxiques). Cependant, les chaînes hydrocarbonées qui constituent les triglycérides sont essentiellement linaires et leur longueur (nombre d'atomes de carbone) est compatible avec les hydrocarbures présents dans les gazoles. Par ailleurs ces chaînes possèdent un nombre d'insaturations généralement compris entre 0 et 3 mais qui peut être plus élevé notamment pour les huiles issues d'algues.

Il est donc nécessaire de transformer ces charges pour obtenir une base gazole de bonne qualité.

Une approche possible consiste à les convertir par transestérification. Les triglycérides, qui constituent essentiellement de telles charges, sont alors convertis, en présence d'un mono-alcool aliphatique, en esters d'acides gras et en glycérine par une réaction de transestérification. Cette réaction peut être catalysée par un catalyseur en phase homogène ou hétérogène. Parmi les inconvénients de cette voie on peut citer : a/ l'augmentation des émissions de NOₓ dans les gaz d'échappement des moteurs à combustion interne en raison de la présence d'oxygène dans les esters ; b/ la température d'ébullition assez élevée, de l'ordre de 360°C, ce qui peut poser problème pour respecter les spécifications de point final du gazole c/ l'obtention d'un indice de cétane non maximisé (autour de 50 ce qui est le minimum requis pour le gazole) et d/ des problèmes liés à la stabilité à l'oxydation en raison de la présence de doubles liaisons sur les chaînes hydrocarbonées.

Une autre voie possible est la transformation catalytique de l'huile végétale en carburant paraffinique désoxygéné en présence d'hydrogène (hydrotraitement). De nombreux catalyseurs métalliques ou sulfures sont connus pour être actifs pour ce type de réaction. Ces procédés d'hydrotraitement d'huiles végétales sont déjà bien connus et sont décrits dans de nombreux brevets. On peut citer par exemple les brevets : US 4,992,605, US 5,705,722, EP 1,681,337 et EP 1,741,768.

Par exemple, la demande de brevet n° EP 1, 681,337 décrit un procédé de transformation de charges issues de sources renouvelables par réaction de désoxygénation pour produire des distillats moyens. Le catalyseur est constitué d'une phase active métallique constituée d'un élément du groupe VIII dispersé sur un support de type oxyde métallique ou carbone. Les catalyseurs utilisés pour la réaction de désoxygénation étant des catalyseurs métalliques, cette voie conduit à la formation exclusive de paraffines par décarboxylation/décarbonylation et conduit à la production d'oxydes de carbones. Ceci présente l'avantage d'une consommation d'hydrogène réduite par rapport aux réactions d'hydrodésoxygénation consommatrices d'hydrogène du fait de la production d'eau, mais implique une diminution de rendement en produit valorisable (tel que par exemple les distillats moyens) du fait de la perte d'un atome de carbone par mole d'hydrocarbure sous la forme de CO ou de CO₂.

De plus, les oxydes de carbone produits par les réactions de décarboxylation/décarbonylation donnent lieu à une réaction de méthanation qui présente des inconvénients importants. En effet, les réactions de méthanation du monoxyde de carbone et dioxyde de carbone selon les équilibres suivants :

CO₂ + 4H₂ ⇄ CH₄ + 2H₂O

CO + 3H₂ ⇄ CH₄ + H₂O

donnent lieu à
1/ une consommation d'hydrogène accrue
2/ la formation d'eau : le mélange eau/oxydes de carbones est bien connu de l'homme de l'art pour favoriser la corrosion carbonique néfaste pour les matériaux du procédé.
3/ La nécessité de purifier l'hydrogène recyclé afin d'éliminer les oxydes de carbones en utilisant par exemple une étape supplémentaire et contraignante de lavages aux amines et/ou de méthanation

Les catalyseurs sulfures sont connus pour être actifs vis à vis des réactions d'hydrotraitement : hydrodésulfuration, hydrodésazotation, hydrodésoxygénation et hydrodémétallation (B. S Clausen, H. T. Topsoe, et F. E. Massoth, issu de l'ouvrage Catalysis Science and Technology, 1996, volume 11, Springer-Verlag).

De nombreux travaux de la littérature font état de leur potentiel pour les réactions de désoxygénation mises en jeu pour la transformation catalytique de bio-liquide (provenant d'oléagineaux ou de la lignocellulose) en carburant. Notamment, Senol et al (Applied Catalysis A: General vol. 326,2007, p.236-244) ont étudié la transformation de molécule modèle de type ester représentative de la fonction hydrophile (groupement ester) et lipophile (chaîne alkyle) des triglycérides présents dans les huiles végétales en présence de catalyseurs sulfures CoMo ou NiMo/Al₂O₃.

Contrairement aux catalyseurs à base de métaux réduits, l'utilisation de solides à base de sulfures de métaux de transition permet la production de paraffines à partir de molécule de type ester selon deux voies réactionnelles :
- L'hydrodésoxygénation conduisant à la formation d'eau par consommation d'hydrogène et à la formation d'hydrocarbures de nombre de carbone (Cn) égal à celui des chaînes d'acides gras initiales,
- La décarboxylation/décarbonylation conduisant à la formation d'oxydes de carbone (monoxyde et dioxyde de carbone : CO et CO2) et à la formation d'hydrocarbures comptant un carbone en moins (Cn-1) par rapport aux chaînes d'acides gras initiales.

La demande de brevet WO2007/141293 décrit un procédé d'hydrodéoxygénation d'une charge issue d'une source renouvelable mettant en oeuvre un catalyseur sous forme sulfure comprenant au moins un métal du groupe VIB et au moins un métal du groupe VIII dont le rapport atomique du métal (ou métaux) du groupe VIII sur métal (ou métaux) du groupe VIB est compris entre 0,48 et 0,97. Ce procédé permet donc la production de paraffines selon les deux voies réactionnelles décrites ci dessus.

Les charges de départ sont des charges issues de sources renouvelables, telles que les huiles et graisses d'origine végétale ou animale, ou des mélanges de telles charges, contenant des triglycérides et/ou des acides gras. Les huiles végétales utilisées dans la présente invention peuvent être brutes ou raffinées, totalement ou en partie, et issues des végétaux suivants : colza, tournesol, soja, palme, palmiste, ricin, olive, noix de coco, jatropha, cette liste n'étant pas limitative. Les huiles d'algues ou de poisson sont également utilisées dans la présente invention. On peut également citer toutes les graisses animales telles que par exemple le lard, le suif ou les graisses composées de résidus de l'industrie alimentaire ou issus des industries de la restauration telles que par exemple les huiles de fritures usagées. Les charges considérées dans la présente invention contiennent très majoritairement des composés hydrocarbonés pairs. Seules les graisses animales comportent au maximum 2,5 % de composés hydrocarbonés impairs.

Les charges ainsi définies contiennent des structures triglycérides et/ou acides gras, dont les chaînes grasses contiennent un nombre d'atomes de carbone compris entre 8 et 25.

Les hydrocarbures produits lors de la conversion des charges de départ selon l'invention sont caractérisés par :
a/ un nombre d'atomes de carbone égal à celui des chaînes des acides gras de départ, si le mécanisme est un mécanisme d'hydrodésoxygénation du groupe carboxylique en groupe alkyl, l'hydrodésoxygénation conduisant à la formation d'eau par consommation' d'hydrogène
b/ une chaîne hydrocarbonée comptant un atome de carbone de moins que les chaînes des acides gras de départ, si le mécanisme mis en jeu est une décarboxylation / décarbonylation, ce mécanisme conduisant à la formation d'oxydes de carbone (monoxyde et dioxyde de carbone : CO et CO₂)
c/ un degré de ramification des hydrocarbures ajusté de manière à obtenir des propriétés de tenue à froid et un indice de cétane compatibles avec les normes en vigueur pour le gazole.

Il est connu d'après l'état de l'art, comme explicité plus haut, que les deux voies de transformation a/ et b/ d'hydrodésoxygénation et décarboxylation / décarbonylation coexistent généralement en présence de catalyseurs sulfures.

L'objectif de la présente invention vise par conséquent à maximiser le rendement en gazole, et cherche à promouvoir le mécanisme d'hydrodésoxygénation décrit en a/. Le choix du catalyseur et des conditions opératoires vise donc à orienter la sélectivité au bénéfice de l'hydrodésoxygénation, tout en cherchant à limiter au strict nécessaire la consommation d'hydrogène, et en particulier celle qui résulterait de réactions non désirées, telle que la méthanation.

Un autre objectif de la présente invention est la production de carburant gazole de bonne qualité par isomérisation des paraffines de la coupe gazole en limitant leur craquage en fractions plus légères non désirées telles que par exemple la coupe naphta.

Il a ainsi été mis en évidence qu'il était possible de contrôler la sélectivité des réactions d'hydrodésoxygénation de charges issues de sources renouvelables en fonction de la nature de la phase active et plus particulièrement en fonction du rapport atomique du métal (ou métaux) du groupe VIII sur métal (ou métaux) du groupe VIB de ladite phase active. L'introduction de nickel dans un catalyseur à base de sulfure de molybdène dans un procédé d'hydrodésoxygénation de charges issues de sources renouvelables a tendance généralement à favoriser les réactions dites de décarboxylation/décarbonylation même si la réaction de transformation des huiles végétales par hydrodésoxygénation reste majoritaire.

Cependant, de manière surprenante, la demanderesse a découvert que l'utilisation d'un rapport atomique du métal (ou métaux) du groupe VIII sur métal (ou métaux) du groupe VIB de ladite phase active et en particulier l'utilisation d'un rapport atomique Ni/Mo adapté permet de contrôler et d'augmenter la sélectivité pour les réactions d'hydrodésoxygénation et ainsi de limiter les réactions de décarboxylation / décarbonylation et donc de limiter les inconvénients engendrés par la formation d'oxydes de carbone.

Ainsi, le catalyseur mis en oeuvre dans le procédé selon l'invention comprend une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095.

### Objet de l'invention

La présente invention concerne un procédé d'hydrodésoxygénation de charges issues de sources renouvelables avec conversion par décarboxylation/décarbonylation limitée à au plus 10%, mettant en oeuvre un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095, ledit procédé étant mis en oeuvre à une température comprise entre 120 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 50 et 3000 Nm³ d'hydrogène/m³ de charge.

Le procédé selon l'invention permet donc de :
1/ maximiser le rendement en base carburant,
2/ limiter la corrosion carbonique,
3/ faciliter la purification de l'hydrogène de recycle,
4/ limiter les réactions de méthanation entraînant une consommation accrue d'hydrogène pour des réactions sans valeur ajoutée.

La présente invention est par ailleurs particulièrement dédiée à la préparation de bases carburant gazoles correspondant aux nouvelles normes environnementales, à partir de charges issues de sources renouvelables.

Les bases gazoles produites selon l'invention sont d'excellente qualité:
■ elles présentent une faible teneur en soufre c'est à dire inférieure à 10 ppm poids,
■ et en aromatiques c'est à dire une teneur en aromatiques totaux inférieure à 5% poids, et une teneur en polyaromatiques inférieure à 2% poids
■ elles possèdent un excellent indice de cétane supérieur à 55, de préférence supérieur à 60 et de manière préférée supérieur à 70, en raison de la structure substantiellement paraffinique des hydrocarbures formés.
■ elles présentent de bonnes propriétés de tenue à froid en raison du degré d'isomérisation des paraffines de la coupe répondant aux spécifications carburants c'est à dire compatibles avec les normes en vigueur : une température limite de filtrabilité inférieure à -15°C et un point de trouble inférieur à -5°C.
■ la densité obtenue est basse, généralement moins de 800 kg/m³, ce qui est un avantage dans la mesure où cela facilite l'obtention pour le pool gazole de la spécification en la matière qui est d'au maximum 845 kg/m³ et permet donc par ailleurs d'incorporer des coupes de plus haute densité.

### Description de l'invention

La présente invention concerne un procédé d'hydrodésoxygénation de charges issues de sources renouvelables avec conversion par décarboxylation/décarbonylation limitée à au plus 10%, mettant en oeuvre un catalyseur massique ou supporté comprenant une phase active constituée d'au moins un élément du groupe VIB et d'au moins un élément du groupe VIII, lesdits éléments étant sous forme sulfure et le rapport atomique du métal (ou métaux) du groupe VIII sur métal (ou métaux) du groupe VIB, étant strictement supérieur à 0 et inférieur à 0,095, ledit procédé étant mis en oeuvre à une température comprise entre 120 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 50 et 3000 Nm³ d'hydrogène/m³ de charge.

Conformément à la présente invention, on appelle phase active, la phase contenant le ou les éléments sous forme sulfure des groupes des métaux, en l'occurrence la phase active du catalyseur selon l'invention est constituée d'au moins un élément sulfuré du groupe VIB et d'au moins un élément sulfuré du groupe VIII.

Conformément à la présente invention, le catalyseur mis en oeuvre dans le procédé selon l'invention peut être supporté c'est à dire qu'il comporte un support minéral amorphe choisi dans le groupe formé par l'alumine, la silice, les silices-alumines, la magnésie, les argiles et les mélanges d'au moins deux de ces minéraux. Ce support peut également avantageusement renfermer d'autres composés tels que par exemple des oxydes choisis dans le groupe formé par l'oxyde de bore, la zircone, l'oxyde de titane, l'anhydride phosphorique.

De manière préférée, le support minéral amorphe est un support alumine (η, δ ou γ). Conformément à la présente invention, ledit catalyseur mis en oeuvre dans le procédé selon l'invention peut alternativement être massique, c'est à dire sans support.

Conformément au procédé selon l'invention, la phase active dudit catalyseur sous forme supporté ou massique est constituée d'au moins un élément du groupe VIB et d'au moins un élément du groupe VIII, ledit élément du groupe VIB étant choisi parmi le molybdène et le tungstène et de préférence, ledit élément du groupe VIB est le molybdène et ledit élément du groupe VIII est choisi parmi le nickel et le cobalt et de préférence ledit élément du groupe VIII est le nickel.

Conformément au procédé selon l'invention, le rapport atomique du métal (ou métaux) du groupe VIII sur métal (ou métaux) du groupe VIB, étant strictement supérieur à 0 et inférieur à 0,095, de préférence compris entre 0,01 et 0,08, de manière préférée entre 0,01 et 0,05 et de manière très préférée entre 0,01 et 0,03.

De préférence, le métal du groupe VIB est le molybdène et le métal du groupe VIII est le nickel et le rapport atomique du métal du groupe VIII sur métal du groupe VIB, c'est à dire le rapport atomique Ni/Mo, est strictement supérieur à 0 et inférieur à 0,095, de préférence compris entre 0,01 et 0,08, de manière préférée entre 0,01 et 0,05 et de manière très préférée entre 0,01 et 0,03.

Dans le cas où ledit catalyseur est sous forme supportée, la teneur en oxyde d'élément du groupe VIB est avantageusement comprise entre 1 % et 30 % poids par rapport à la masse totale du catalyseur, de préférence comprise entre 10 et 25 % poids, de manière très préférée entre 15 % et 25 % poids et de manière encore plus préférée entre 17 et 23% poids et la teneur en oxyde d'élément du groupe VIII est avantageusement strictement supérieure à 0 % et inférieure à 1,5 % poids par rapport à la masse totale du catalyseur, de préférence comprise entre 0,05 % et 1,1 % poids, de manière très préférée entre 0,07 % et 0,65 % poids et de manière encore plus préférée entre 0,08 et 0,36% poids.

La valeur minimale du rapport atomique Ni/Mo égal à 0,01, pour une teneur en oxyde de molybdène de 1% poids, dans le cadre de l'invention, correspond à une teneur en nickel de 50 ppm poids, détectable par les techniques usuelles d'analyse élémentaire par ICP (Inductively coupled plasma ou selon la terminologie française par plasma inductif), ladite limite de détection du nickel étant de l'ordre du ppm.

Dans le cas où ledit catalyseur est sous forme massique, les teneurs en oxyde des éléments des groupes VIB et VIII sont définies par les rapports atomiques du métal (ou métaux) du groupe VIII sur métal (ou métaux) du groupe VIB définis selon l'invention.

Pour un rapport atomique du métal (ou métaux) du groupe VIII sur métal (ou métaux) du groupe VIB strictement supérieur à 0 et inférieur à 0,095, la teneur en élément du groupe VIB est avantageusement supérieure à 95,3% et strictement inférieure à 100% poids en équivalent oxyde de l'élément du groupe VIB et la teneur en élément du groupe VIII est avantageusement strictement supérieur à 0 et inférieure à 4,7% poids en équivalent oxyde de l'élément du groupe VIII.

Pour un rapport atomique du métal (ou métaux) du groupe VIII sur métal (ou métaux) du groupe VIB compris entre 0,01 et 0,08, la teneur en élément du groupe VIB est avantageusement comprise entre 96 et 99,4% poids en équivalent oxyde de l'élément du groupe VIB et la teneur en élément du groupe VIII est avantageusement comprise entre 0,6 et 4% poids en équivalent oxyde de l'élément du groupe VIII.

Pour un rapport atomique du métal (ou métaux) du groupe VIII sur métal (ou métaux) du groupe VIB compris entre 0,01 et 0,05, la teneur en élément du groupe VIB est avantageusement comprise entre 97,4 et 99,4% poids en équivalent oxyde de l'élément du groupe VIB et la teneur en élément du groupe VIII est avantageusement comprise entre 0,6 et 2,6% poids en équivalent oxyde de l'élément du groupe VIII.

Pour un rapport atomique du métal (ou métaux) du groupe VIII sur métal (ou métaux) du groupe VIB compris entre 0,01 et 0,03, la teneur en élément du groupe VIB est avantageusement comprise entre 98,4 et 99,4% poids en équivalent oxyde de l'élément du groupe VIB et la teneur en élément du groupe VIII est avantageusement comprise entre 0,6 et 1,6% poids en équivalent oxyde de l'élément du groupe VIII.

Le catalyseur selon l'invention peut également avantageusement contenir au moins un élément dopant afin d'atteindre un niveau de conversion élevé tout en maintenant une sélectivité de réaction pour la voie d'hydrodésoxygénation. La phase active dans le cas où ledit catalyseur est sous forme massique et/ou le support dans le cas où ledit catalyseur est sous forme supportée peuvent donc également avantageusement contenir au moins un élément dopant choisi parmi le phosphore, le fluor et le bore et de préférence, l'élément dopant est le phosphore. Il est connu de l'homme de l'art que ces éléments ont des effets indirect sur l'activité catalytique : une meilleure dispersion de la phase active sulfurée et une augmentation de l'acidité du catalyseur favorable aux réactions d'hydrotraitement (Sun et al, Catalysis Today 86(2003) 173).

Ledit élément dopant peut être introduit dans la matrice ou être déposé sur le support. On peut également avantageusement déposer du silicium sur le support, seul ou avec le phosphore et/ou le bore et/ou le fluor.

La teneur en élément dopant, de préférence en phosphore est avantageusement strictement supérieure à 1% et inférieure à 8 % poids d'oxyde P₂O₅ par rapport à la masse totale du catalyseur et de préférence supérieure à 1,5% et inférieure à 8% et de manière très préférée supérieure à 3% et inférieure à 8% poids.

L'utilisation du catalyseur décrit ci dessus dans le procédé selon l'invention permet de limiter la formation d'oxyde de carbone pour les raisons évoquées précédemment en limitant les réactions de décarboxylation / décarbonylation.

Dans le cadre de l'invention, il est ainsi possible de maintenir une conversion totale de la charge issue de source renouvelable avantageusement supérieure ou égale à 90 %, de préférence supérieure à 95 et de manière préférée supérieure à 98%, tout en maximisant le rendement en produit d'hydrodésoxygénation, c'est à dire en produits désoxygénés qui reste avantageusement supérieur ou égale à 90% et de préférence supérieur ou égale à 95% et de manière préférée, supérieure ou égale à 96 %.

Conformément à l'invention, la conversion de la charge par décarboxylation/décarbonylation est limitée à au plus 10%, et de préférence limitée à au plus 5% et de manière plus préférée à au plus 4%.

La réaction d'hydrodésoxygénation conduit à la formation d'eau par consommation d'hydrogène et à la formation d'hydrocarbures de nombre de carbone égal à celui des chaînes d'acides gras initial. Les charges considérées dans la présente invention contiennent très majoritairement des composés hydrocarbonés pairs. En effet c'est une caractéristique bien connue des huiles végétales, issues d'algues et des huiles de poison d'être très majoritairement composée de triglycérides dont les chaînes hydrocarbonées comportent un nombre d'atome de carbone pair allant généralement de 8 à 24. Certaines graisses d'origine animales peuvent présenter des teneurs en chaînes hydrocarbonées à 17 atomes de carbone de quelques pourcents (généralement de 2 à 3% masse) (Référence : Biodiesel, the comprehensive handbook de Martin Mittelbach et Claudia Remschmidt). L'effluent issu du procédé d'hydrodésoxygénation selon l'invention comporte donc des composés hydrocarbures de nombre de carbone (Cn) (n étant un nombre pair) égal à celui des chaînes d'acides gras initial, très largement majoritaires par rapport aux composés hydrocarbures comportant un carbone en moins (Cn-1) (n-1 étant par définition impair) par rapport aux chaînes d'acides gras initiales, obtenus par les réactions de décarbonylation/décarboxylation. La sélectivité pour la voie hydrodésoxygénation est mise en évidence par la mesure du rendement total en composés hydrocarbures de nombre de carbone (Cn) égal à celui des chaînes d'acides gras initial et du rendement total en composés hydrocarbures comportant un carbone en moins (Cn-1) par rapport aux chaînes d'acides gras initiales dans la fraction liquide valorisable en carburant. Les rendements en hydrocarbures (Cn) ayant un nombre pair d'atomes de carbone et (Cn-1) ayant un nombre impair d'atomes de carbone permettant d'accéder à la sélectivité de réaction pour la réaction d'hydrodésoxygénation sont obtenus par analyse chromatographique en phase gazeuse des effluents liquides de réaction valorisable en carburant. La technique de mesure par analyse chromatographique en phase gazeuse est une méthode connue de l'homme du métier.

Il a ainsi été mis en évidence qu'il était possible de contrôler la sélectivité des réactions d'hydrodésoxygénation de charges issues de sources renouvelables et de minimiser les réactions de décarboxylation/décarbonylation en fonction de la nature de la phase active et plus particulièrement en fonction du rapport atomique du métal (ou métaux) du groupe VIII sur métal (ou métaux) du groupe VIB de ladite phase active.

De manière surprenante, l'utilisation d'un catalyseur présentant un rapport atomique du métal (ou métaux) du groupe VIII sur métal (ou métaux) du groupe VIB de ladite phase active et en particulier l'utilisation d'un rapport atomique Ni/Mo strictement supérieur à 0 et inférieur à 0,095 permet de contrôler et d'augmenter la sélectivité pour les réactions d'hydrodésoxygénation et ainsi de limiter les réactions de décarboxylation / décarbonylation et donc de limiter les inconvénients engendrés par la formation d'oxydes de carbone.

Par ailleurs, l'augmentation de la teneur en élément du groupe VIII et en particulier en nickel tend à favoriser la réaction de décarboxylation / décarbonylation, même si la réaction d'hydrodésoxygénation reste majoritaire. Ainsi, il a été mis en évidence que la sélectivité en hydrodésoxygénation est optimale en particulier pour des valeurs dû rapport atomique Ni/Mo comprise entre 0,01 et 0,03.

Dans le cas de l'utilisation de catalyseur supporté selon l'invention, la fonction hydrogénante peut être introduite sur ledit catalyseur par toute méthode connue de l'homme du métier comme par exemple le comalaxage ou l'imprégnation à sec et la sulfuration est ensuite effectuée in-situ ou ex-situ selon une méthode connue de l'homme du métier.

Dans le cas de l'utilisation de catalyseur massique selon l'invention, ledit catalyseur est préparé selon des méthodes connues de l'homme du métier telles que par exemple la décomposition de thiosels métalliques.

Conformément au procédé d'hydrodésoxygénation selon l'invention, la charge, éventuellement prétraitée, est mise au contact d'un catalyseur selon l'invention à une température comprise entre 120 et 450°C, de préférence entre 120 et 350°C, de manière préférée entre 150 et 320°C, et de manière encore plus préférée entre 180 et 310°C. La pression est comprise entre 1 MPa et 10 MPa, de manière préférée entre 1 MPa et 6 MPa. La vitesse spatiale horaire est comprise entre 0,1 h⁻¹ et 10 h⁻¹. La charge est mise au contact dudit catalyseur en présence d'hydrogène. La quantité totale d'hydrogène mélangée à la charge est telle que le ratio hydrogène/charge est compris entre 50 et 3000 Nm³ d'hydrogène/m³ de charge, de préférence entre 70 et 2000 Nm³ d'hydrogène/m³ de charge et de manière préférée compris entre 150 et 1500 Nm³ d'hydrogène/m³ de charge.

Le procédé d'hydrodésoxygénation selon l'invention est avantageusement mis en oeuvre en lit fixe ou en lit bouillonnant et de préférence en lit fixe.

Dans le cas ou le procédé d'hydrodésoxygénation est mis en oeuvre en lit fixe, ledit procédé opère à une température comprise entre 120 et 450°C, de préférence entre 120 et 350°C, de manière préférée entre 150 et 320°C, et de manière encore plus préférée entre 180 et 310°C. La pression est comprise entre 1 MPa et 10 MPa, de manière préférée entre 1 MPa et 6 MPa. La vitesse spatiale horaire est comprise entre 0,1 h⁻¹ et 10 h⁻¹. La charge est mise au contact dudit catalyseur en présence d'hydrogène. La quantité totale d'hydrogène mélangée à la charge est telle que le ratio hydrogène/charge est compris entre 50 et 3000 Nm³ d'hydrogène/m³ de charge, de préférence entre 70 et 2000 Nm³ d'hydrogène/m³ de charge et de manière préférée compris entre 150 et 1500 Nm³ d'hydrogène/m³ de charge. Dans le cas ou le procédé d'hydrodésoxygénation est mis en oeuvre en lit bouillonnant, ledit procédé opère sous une pression absolue 2 à 35 MPa, de préférence de 2 à 15 MPa et de manière préférée, de 3 à 10 MPa, à une température comprise entre 200 et 450°C, et de préférence entre 250 et 380°C, à une WH comprise entre 0,1 h-1 et 10 h-1 et de préférence comprise entre 0,5 h-1 et 5 h-1 et à une quantité d'hydrogène mélangée à la charge comprise entre 50 et 5000 normaux mètres cube (Nm3) par mètre cube (m3) de charge liquide, de préférence entre 100 à 1000 Nm3/m3 et de manière préférée entre 200 et 500 Nm3/m3.

On ne sortirait pas du cadre de la présente invention en utilisant dans le procédé d'hydrodésoxygénation selon l'invention, un seul catalyseur ou plusieurs catalyseurs différents selon l'invention, de manière simultanée ou de manière successive. Ledit procédé peut avantageusement être effectué industriellement dans un ou plusieurs réacteurs avec un ou plusieurs lits catalytiques et de préférence à courant descendant mixte de gaz et de liquide. Ce type de réacteur est communément appelé par l'homme de l'art réacteur à lit fixe et écoulement ruisselant.

Il est bien connu de l'homme de l'art que les réactions mises en oeuvre sont très exothermiques. C'est dire qu'elles s'accompagnent du dégagement d'une importante quantité de chaleur. Il en résulte une forte augmentation de la température du milieu réactionnel qui peut entraîner des effets indésirables. Par ailleurs, la température a un effet d'augmentation de la vitesse de la réaction qui va alors dégager encore plus de chaleur. Ce type de phénomène auto-entretenu doit impérativement être contrôlé sous peine de le voir diverger vers des températures très élevées pouvant atteindre des niveaux supérieurs aux points de fusions des matériaux du réacteur. Sans aller jusqu'à cette extrémité, les températures élevées favorisent les réactions de craquage formant des hydrocarbures légers (méthane, éthane) difficilement valorisables et diminuant d'autant la quantité de paraffines produites. D'une façon générale il apparaît indispensable de contrôler l'augmentation de température liée à la mise en oeuvre des réactions exothermiques visées par l'invention tant pour des raisons de sécurité que de rendement global du procédé.

Pour cela différentes techniques bien connues de l'homme de l'art sont envisageables comme par exemple la méthode décrite dans le brevet WO2008/058664.

De manière avantageuse, la charge peut être préalablement pré-traitée ou pré-raffinée de façon à éliminer, par un traitement approprié, des contaminants présents naturellement dans les bio-liquides d'origine renouvelable tels que les métaux alcalins, alcalino-terreux, et métaux de transition ainsi que l'azote. Des traitements appropriés peuvent par exemple être des traitements thermiques et/ou chimiques, bien connus de l'homme du métier du raffinage.

De manière préférée, le prétraitement optionnel consiste en une pre-hydrogénation douce de ladite charge de façon à hydrogéner les insaturations réactives. La pré-hydrogénation douce opère avantageusement à une température comprise entre 50 et 400 °C et à une pression d'hydrogène comprise entre 0,1 et 10 MPa et de manière préférée, à une température comprise entre 150 et 200 °C. Le catalyseur de pré-hydrogénation comprend avantageusement des métaux du groupe VIII et/ou VIB et de manière préférée, le catalyseur de pré-hydrogénation est un catalyseur à base de palladium, de platine de nickel, de nickel et de molybdène ou à base de cobalt et de molybdène, dispersé sur un oxyde métallique ou un mélange d'oxyde tels que les alumines, silices, titane, zéolithe.

Les métaux des catalyseurs utilisés dans l'étape de prétraitement optionnel du procédé selon l'invention sont des métaux sulfurés ou des phases métalliques et de préférence des phases métalliques.

Dans le but de produire un carburant gazole présentant des propriétés améliorées, l'effluent hydrocarboné est ensuite traité selon les étapes optionnelles suivantes :

L'effluent issu du procédé d'hydrodésoxygénation selon l'invention subit ensuite au moins une étape de séparation et de préférence une étape de séparation gaz/liquide et de séparation de l'eau et d'au moins une base hydrocarbonée liquide, lesdites étapes étant optionnelles et pouvant être mises en oeuvre dans un ordre indifférent l'une par rapport à l'autre.

De préférence, l'effluent issu du procédé d'hydrodésoxygénation selon l'invention subit d'abord une étape de séparation gaz/liquide. Le but de cette étape est de séparer les gaz du liquide, et notamment, de récupérer les gaz riches en hydrogène pouvant contenir également des gaz tels que CO, le CO₂, l'H2S et le propane et au moins un effluent liquide, lesdits gaz pouvant avantageusement être également purifiés par des méthodes connues de l'homme du métier telles que la méthanation pour la transformation du CO en CH4 et le lavage aux amines pour l'élimination du CO2.

De préférence, effluent liquide issu de la séparation gaz/liquide optionnelle précédente subit ensuite une séparation d'au moins une partie et de préférence la totalité de l'eau formée, d'au moins une base hydrocarbonée liquide, l'eau étant produite lors des réactions d'hydrodésoxygénation.

Le but de cette étape est de séparer l'eau de l'effluent hydrocarboné liquide. On entend par élimination de l'eau, l'élimination de l'eau produite par les réactions d'hydrodésoxygénation (HDO). L'élimination plus ou moins complète de l'eau est avantageusement fonction de la tolérance à l'eau du catalyseur d'hydroisomérisation utilisé dans l'étape optionnelle suivante du procédé selon l'invention. L'élimination de l'eau peut être réalisée par toutes les méthodes et techniques connues de l'homme du métier, telles que par exemple par séchage, passage sur un dessicant, flash, extraction par solvant, distillation et décantation ou par association d'au moins deux de ces méthodes.

De façon optionnelle, une étape de purification finale des différents polluants peut être mise en oeuvre par des méthodes connues de l'homme du métier telles que par exemple par strippage à la vapeur ou à l'azote ou par coalescence et/ou masse de captation. Une étape d'élimination des composés azotés de ladite base hydrocarbonée obtenue peut avantageusement être mise en oeuvre entre l'étape d'hydrodésoxygénation selon l'invention et une étape optionnelle d'hydroisomérisation.

De préférence, une étape d'élimination des composés azotés est mise en oeuvre après ladite étape optionnelle de séparation de l'eau et de préférence après ladite étape de purification finale.

La base hydrocarbonée issue de l'étape optionnelle précédente de séparation de l'eau ou de préférence de ladite étape de purification finale contient généralement des composés organiques azotés résiduels non éliminés lors des réactions d'hydrodésoxygénation du procédé selon l'invention. Lesdits composés organiques azotés résiduels sont des inhibiteurs des catalyseurs d'hydroisomérisation, ils doivent donc être éliminés de ladite base hydrocarbonée avant son passage dans une étape optionnelle d'hydroisomérisation. L'élimination des composés organiques azotés résiduels peut être réalisée par toutes les techniques connues de l'homme de métier, telles que par exemple l'utilisation de masses de captation. Nous entendons par masse de captation les alumines activées ou non, les silices-alumines, les zéolithes, les charbons actifs, et les résines échangeuses d'ions. De préférence, l'étape d'élimination des composés organiques azotés est mise en oeuvre sur une résine échangeuse d'ions.

Selon un mode de réalisation préféré, une partie au moins de la base hydrocarbonée liquide obtenue à l'issue de l'étape d'élimination des composés organiques azotés précédente est hydroisomérisée en présence d'un catalyseur d'hydroisomérisation sélective. Les catalyseurs d'hydroisomérisation utilisés sont avantageusement de type bifonctionnels, c'est-à-dire qu'ils possèdent une fonction hydro/déshydrogénante et une fonction hydroisomérisante.

Ledit catalyseur d'hydroisomérisation comprend avantageusement au moins un métal du groupe VIII et/ou au moins un métal du groupe VIB en tant que fonction hydrodéshydrogénante et au moins un tamis moléculaire ou un support minéral amorphe en tant que fonction hydroisomérisante.

Ledit catalyseur d'hydroisomérisation comprend avantageusement soit au moins un métal noble du groupe VIII de préférence choisi parmi le platine ou le palladium, actifs sous leur forme réduite, soit au moins un métal du groupe VIB, de préférence choisi parmi le molybdène ou le tungstène, en combinaison avec au moins un métal non noble du groupe VIII, de préférence choisi parmi le nickel et le cobalt, utilisés de préférence sous leur forme sulfurée.

Dans le cas où le catalyseur d'hydroisomérisation comprend au moins un métal noble du groupe VIII, la teneur totale en métal noble du catalyseur d'hydroisomérisation est avantageusement comprise entre 0,01 et 5% en poids par rapport au catalyseur fini, de manière préférée entre 0,1 et 4% en poids et de manière très préférée entre 0,2 et 2% en poids.

De préférence, le catalyseur d'hydroisomérisation comprend le platine ou le palladium et de manière préférée, le catalyseur d'hydroisomérisation comprend le platine.

Dans le cas où le catalyseur d'hydroisomérisation comprend au moins un métal du groupe VIB en combinaison avec au moins un métal non noble du groupe VIII, la teneur en métal du groupe VIB du catalyseur d'hydroisomérisation est avantageusement comprise, en équivalent oxyde, entre 5 et 40 % en poids par rapport au catalyseur fini, de manière préférée entre 10 et 35 % en poids et de manière très préférée entre 15 et 30 % en poids et la teneur en métal du groupe VIII dudit catalyseur est avantageusement comprise, en équivalent oxyde, entre 0,5 et 10 % en poids par rapport au catalyseur fini, de manière préférée entre 1 et 8 % en poids et de manière très préférée entre 1,5 et 6% en poids.

La fonction hydro/déshydrogénante métallique peut avantageusement être introduite sur ledit catalyseur par toute méthode connue de l'homme du métier, comme par exemple le comalaxage, l'imprégnation à sec, l'imprégnation par échange.

Selon un mode de réalisation préféré, ledit catalyseur d'hydroisomérisation comprend au moins un support minéral amorphe en tant que fonction hydroisomérisante, ledit un support minéral amorphe étant choisi parmi les silice-alumines et alumines silicées et de manière préférée les silice-alumines.

Selon un autre mode de réalisation préféré, ledit catalyseur d'hydroisomérisation comprend au moins un tamis moléculaire, de préférence au moins un tamis moléculaire zéolithique et de manière plus préférée, au moins un tamis moléculaire zéolithique 10 MR monodimensionnel en tant que fonction hydroisomérisante.

Les tamis moléculaires zéolithiques sont définis dans la classification "Atlas of Zeolite Structure Types", W. M Meier, D. H. Oison and Ch. Baerlocher, 5th revised édition, 2001, Elsevier auquel se réfère également la présente demande. Les zéolithes y sont classées selon la taille de leurs ouvertures de pores ou canaux.

Les tamis moléculaires zéolithiques 10 MR monodimensionnels présentent des pores ou canaux dont l'ouverture est définie par un anneau à 10 atomes d'oxygène (ouverture à 10 MR). Les canaux du tamis moléculaire zéolithique ayant une ouverture à 10 MR sont avantageusement des canaux monodimensionnels non interconnectés qui débouchent directement sur l'extérieur de ladite zéolithe. Les tamis moléculaires zéolithiques 10 MR monodimensionnels présents dans ledit catalyseur d'hydroisomérisation comprennent avantageusement du silicium et au moins un élément T choisi dans le groupe formé par l'aluminium, le fer, le gallium, le phosphore et le bore, de préférence l'aluminium. Les rapports Si/Al des zéolithes décrites ci-dessus sont avantageusement ceux obtenus à la synthèse ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques. Elles sont, de préférence, pratiquement totalement, sous forme acide, c'est-à-dire que le rapport atomique entre le cation de compensation monovalent (par exemple le sodium) et l'élément T inséré dans le réseau cristallin du solide est avantageusement inférieur à 0,1, de préférence inférieur à 0,05 et de manière très préférée inférieur à 0,01. Ainsi, les zéolithes entrant dans la composition dudit catalyseur sélectif d'hydroisomérisation sont avantageusement calcinées et échangées par au moins un traitement par une solution d'au moins un sel d'ammonium de manière à obtenir la forme ammonium des zéolithes qui, une fois calcinée, conduisent à la forme acide desdites zéolithes.

Ledit tamis moléculaire zéolithique 10 MR monodimensionnel dudit catalyseur d'hydroisomérisation est avantageusement choisi parmi les tamis moléculaires zéolithiques de type structural TON, tel que la NU-10 ,FER, tel que la ferrierite, EUO, choisis parmi la EU-1 et la ZSM-50, prises seules ou en mélange, ou les tamis moléculaires zéolithiques ZSM-48, ZBM-30, IZM-1, COK-7, EU-2 et EU-11, pris seul ou en mélange. De manière préférée, ledit tamis moléculaire zéolithique 10 MR monodimensionnel est choisi parmi les tamis moléculaires zéolithiques ZSM-48, ZBM-30, IZM-1 et COK-7, pris seul ou en mélange. De manière encore plus préférée, ledit tamis moléculaire zéolithique 10 MR monodimensionnel est choisi parmi les tamis moléculaires zéolithiques ZSM-48 et ZBM-30, pris seul ou en mélange.

De manière très préférée, ledit tamis moléculaire zéolithique 10 MR monodimensionnel est la ZBM-30 et de manière encore plus préférée, ledit tamis moléculaire zéolithique 10 MR monodimensionnel est la ZBM-30 synthétisée avec le structurant organique triéthylènetétramine.

De préférence, le catalyseur d'hydroisomérisation comprend une phase active métallique constituée de platine et une fonction hydroisomérisante à base de ZBM-30 et de manière préférée, le catalyseur d'hydroisomérisation comprend une phase active métallique constituée de platine et une fonction hydroisomérisante à base de ZBM-30 synthétisée avec le structurant organique triéthylènetétramine.

La zéolithe ZBM-30 est décrite dans le brevet EP-A-46 504, et la zéolithe COK-7 est décrite dans les demandes de brevet EP 1 702 888 A1 ou FR 2 882 744 A1.

La zéolithe IZM-1 est décrite dans la demande de brevet FR-A-2 911 866.

Les zéolithes de type structural TON sont décrites dans l'ouvrage "Atlas of Zeolithe Structure Types", W.M. Meier, D.H. Olson and Ch. Baerlocher, 5th Revised édition, 2001, Elsevier.

La zéolithe de type structural TON est décrite dans l'ouvrage "Atlas of Zeolithe Structure Types", ci-dessus cité et en ce qui concerne la zéolithe NU-10, dans les brevets EP-65400 et EP-77624.

La zéolithe de type structural FER est décrite dans l'ouvrage "Atlas of Zeolithe Structure Types", ci-dessus cité.

La teneur en tamis moléculaire zéolithique 10 MR monodimensionnel est avantageusement comprise entre 5 et 95% poids, de préférence entre 10 et 90% poids, de manière plus préférée entre 15 et 85% poids et de manière très préférée entre 20 et 80% poids par rapport au catalyseur fini.

De préférence, ledit catalyseur d'hydroisomérisation comprend également un liant constitué d'une matrice minérale poreuse. Ledit liant peut avantageusement être utilisé durant l'étape de mise en forme dudit catalyseur d'hydroisomérisation.

De préférence, la mise en forme est réalisée avec un liant constitué d'une matrice contenant de l'alumine, sous toutes ses formes connues de l'homme du métier, et de manière très préférée avec une matrice contenant de l'alumine gamma.

Les catalyseurs d'hydroisomérisation obtenus sont avantageusement mis en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudres concassées, de tablettes, d'anneaux, de billes, de roues. D'autres techniques que l'extrusion, telles que le pastillage ou la dragéification, peuvent avantageusement être utilisées.

Dans le cas où le catalyseur d'hydroisomérisation contient au moins un métal noble, le métal noble contenu dans ledit catalyseur d'hydroisomérisation doit avantageusement être réduit. Une des méthodes préférées pour conduire la réduction du métal est le traitement sous hydrogène à une température comprise entre 150°C et 650°C et une pression totale comprise entre 1 et 250 bar. Par exemple, une réduction consiste en un palier à 150°C de deux heures puis une montée en température jusqu'à 450°C à la vitesse de 1 °C/min puis un palier de deux heures à 450°C ; durant toute cette étape de réduction, le débit d'hydrogène est de 1000 normaux m³ hydrogène / m³ catalyseur et la pression totale maintenue constante à 1 bar. Toute méthode de réduction ex-situ peut avantageusement être envisagée.

Dans l'étape d'hydroisomérisation, la charge est avantageusement mise en contact, en présence d'hydrogène avec ledit catalyseur d'hydroisomérisation, à des températures et des pressions opératoires permettant avantageusement de réaliser une hydroisomérisation de la charge non convertissante. Cela signifie que l'hydroisomérisation s'effectue avec une conversion de la fraction 150°C⁺ en fraction 150°C⁻ inférieure à 20% en poids, de manière préférée inférieure à 10% en poids et de manière très préférée inférieure à 5% en poids.

Ainsi, l'étape optionnelle d'hydroisomérisation du procédé selon l'invention opère avantageusement à une température comprise entre 150 et 500°C, de préférence entre 150°C et 450°C, et de manière très préférée, entre 200 et 450°C, à une pression comprise entre 1 MPa et 10 MPa, de préférence entre 1 MPa et 10 MPa et de manière très préférée, entre 2 MPa et 9 MPa, à une vitesse volumique horaire avantageusement comprise entre 0,1 h⁻¹ et 10 h⁻¹, de préférence entre 0,2 et 7 h⁻¹ et de manière très préférée, entre 0,5 et 5 h⁻¹, à un débit d'hydrogène tel que le rapport volumique hydrogène/hydrocarbures est avantageusement compris entre 70 et 1000 Nm³/m³ de charge, entre 100 et 1000 normaux m³ d'hydrogène par m³ de charge et de manière préférée entre 150 et 1000 normaux m³ d'hydrogène par m³ de charge.

De manière préférée, l'étape d'hydroisomérisation éventuelle opère à co-courant.

L'effluent hydroisomérisé est ensuite avantageusement soumis au moins en partie, et de préférence en totalité, à une ou plusieurs séparations. Le but de cette étape est de séparer les gaz du liquide, et notamment, de récupérer les gaz riches en hydrogène pouvant contenir également des légers tels que la coupe C₁-C₄ et au moins une coupe gazole et une coupe naphta. La valorisation de la coupe naphta n'est pas l'objet de la présente invention, mais cette coupe peut avantageusement être envoyée dans une unité de vapocraquage ou de reformage catalytique.

### Traitement et recyclage des gaz

Le gaz contenant l'hydrogène qui a été séparé lors de l'étape de séparation optionnelle issue du procédé d'hydodésoxygénation selon l'invention et/ou de l'étape optionnelle d'hydroisomérisation, est, si nécessaire, avantageusement au moins en partie traité pour réduire sa teneur en légers (C₁ à C₄).

La possibilité existe d'additionner au gaz de recyclage issu de l'étape de séparation optionnelle précédente une certaine quantité de composés soufrés tels que par exemple le DMDS, (di-méthyl disulfure), qui par décomposition thermique produit de l'hydrogène sulfuré H₂S. Ce dispositif permet de maintenir si nécessaire le catalyseur d'hydrotraitement et/ou le catalyseur d'hydroisomérisation à l'état sulfuré. De façon avantageuse, la quantité de composé soufré introduite est telle que la teneur en H₂S dans le gaz de recycle est au moins de 15 ppm volume, de préférence d'au moins 0,1 % volume, voire d'au au moins 0.2 % volume.

On peut avantageusement introduire l'hydrogène de recycle soit avec la charge entrant dans le procédé d'hydrodésoxygénation selon l'invention et/ou dans l'étape d'hydroisomérisation optionnelle, soit sous forme d'hydrogène de trempe entre les lits de catalyseurs d'hydrodésoxygénation selon l'invention et/ou d'hydroisomérisation.

### Produits obtenus.

Le produit fourni selon ce procédé est doté d'excellentes caractéristiques, qui en font une base gazole d'excellente qualité :
■ sa teneur en soufre est inférieure à 10 ppm poids.
■ sa teneur en aromatiques totaux est inférieure à 5% poids, et la teneur en polyaromatiques est inférieure à 2% poids.
■ son indice de cétane est excellent, supérieur à 55.
■ sa densité est inférieure à 840 kg/m³, et le plus souvent inférieure à 820 kg/m³.
■ ses propriétés de tenue à froid sont compatibles avec les normes en vigueur : une température limite de filtrabilité inférieure à -15°C et un point de trouble inférieur à - 5°C.

L'exemple qui suit précise l'invention sans toutefois en limiter sa portée.

### Exemple :

### Hydrodésoxygénation : Comparaison de performances de catalyseurs NiMoP/Al₂O₃ à rapports Ni/Mo variables.

Dans un réacteur isotherme et à lit fixe chargé de 100 mL de catalyseur d'hydrotraitement, on introduit 50 mUh huile de colza pré-raffinée de densité 920 kg/m³ présentant une teneur en soufre inférieure à 10 ppm poids, d'indice de cétane de 35. 700 Nm³ d'hydrogène/m³ de charge sont introduits dans le réacteur maintenu à une température de 300°C et à une pression de 5 MPa.

Les principales caractéristiques de la charge d'huile de colza utilisée dans le procédé selon l'invention sont reportées dans le Tableau 1.

La charge constituée d'huile de colza contient des triglycérides dont les chaînes hydrocarbonées ont majoritairement un nombre de carbone pair. Les chaînes contenant un nombre de carbone impair dans la charge initiale (exclusivement C17 pour cette huile) et la contribution des produits de transformation des hydrocarbures de nombre impair C17:0 et C17:1 par les deux voies de réaction, hydrodésoxygénation et décarboxylation/décarbonylation étant très minoritaire sont négligés pour les calculs de rendements en hydrocarbures pairs et impairs.

**Tableau 1**

| Propriétés de la charge | Valeurs |
|---|---|
| *Analyse élémentaire* | |
| S [ppm pds] | 4 |
| N [ppm pds] | 23 |
| P [ppm pds] | 177 |
| C [%pds] | 77,2 |
| H [%pds] | 11,6 |
| O [%pds] | 11,2 |

| *Composition en acide gras (%)* | |
|---|---|
| 14:0 | 0,1 |
| 16:0 | 5,0 |
| 16:1 | 0,3 |
| 17:0 | 0,1 |
| 17:1 | 0,1 |
| 18:0 | 1,5 |
| 18:1 trans | <0,1 |
| 18:1 cis | 60,1 |
| 18:2 trans | <0,1 |
| 18:2 cis | 20,4 |
| 18:3 trans | <0,1 |
| 18:3 cis | 9,6 |
| 20:0 | 0,5 |
| 20:1 | 1,2 |
| 22:0 | 0,3 |
| 22:1 | 0,2 |
| 24:0 | 0,1 |
| 24:1 | 0,2 |

Le catalyseur NiMoP1 conforme à l'invention et utilisé dans le procédé selon l'invention comprend 0,22 % poids de NiO, 21 % poids de MoO3 et de 5 % poids de P2O5 supporté sur une alumine gamma. Le catalyseur NiMoP1 présente un rapport atomique Ni/Mo égal à 0,02. Le catalyseur NiMoP2 conforme à l'invention et utilisé dans le procédé selon l'invention comprend 0,54 % poids de NiO, 21 % poids de MoO3 et 5 % poids de P2O5 supporté sur une alumine gamma. Le catalyseur NiMoP2 présente un rapport atomique Ni/Mo égal à 0,05. Le catalyseur NiMoP3 non conforme à invention et utilisé à titre comparatif dans le procédé selon l'invention comprend 21 % poids de MoO3, 5 % poids de P2O5 et 4,35 % poids de NiO dispersé sur le même type de support alumine. Le catalyseur NiMoP3 présente un rapport atomique Ni/Mo égal à 0,4.

Dans les trois cas, le rapport massique Mo/P est gardé constant.

Les catalyseurs supportés sont préparés par imprégnation à sec des précurseurs oxydes en solution puis sulfurés in-situ, à une température de 350 °C, préalablement au test à l'aide d'une charge gazole de distillation directe additivée de 2 % en poids diméthyldisulfure (DMDS). Après sulfuration in situ dans l'unité sous pression, la charge issue d'une source renouvelable constituée par l'huile de colza décrite dans le tableau 1 est envoyée dans le réacteur.

Afin de maintenir le catalyseur à l'état sulfure, on ajoute à la charge 50 ppm poids de soufre sous forme de DMDS. Dans les conditions de réactions, le DMDS est totalement décomposé pour former du méthane et de l'H2S..

La méthode de préparation des catalyseurs ne limite pas la portée de invention.

Les résultats obtenus pour les catalyseurs NiMoP1, NiMoP2, conformes à l'invention et NiMoP3, non conformes à invention sont reportés dans le Tableau 2.

**Tableau 2**

| | NiMoP1 | NiMoP2 | NiMoP3 |
|---|---|---|---|
| Rapport atomique Ni/Mo | 0,02 | 0,05 | 0,4 |
| Conditions opératoires | | | |
| Température [°C] | 300 | 300 | 300 |
| Pression [MPa] | 5 | 5 | 5 |
| H₂/charge [Nm³/m³] | 700 | 700 | 700 |
| teneur en soufre [ppm pds] | 50 | 50 | 50 |
| Résultats | | | |
| Conversion totale de la charge [%poids] | 100 | 100 | 100 |
| Rendement en produits désoxygénés [%poids] | 100 | 100 | 100 |
| Sélectivité HDO** [HC pairs*, %poids] | 96,8 | 92,8 | 82 |
| Sélectivité Décarb.** [HC impairs*, %poids] | 3,2 | 7,2 | 18 |
| HC pairs / HC impairs [%poids / %poids] | 30 | 13 | 4,6 |

| | | | |
|---|---|---|---|
| * rendements en HC pairs = hydrocarbures C₁₄-C₂₄ , Rendements en HC impairs = hydrocarbures C₁₅-C₂₃ ** Sélectivité par rapport aux effluents paraffiniques produits | | | |

Nous constatons que dans les mêmes conditions de réaction et pour une conversion totale de l'huile de colza, l'utilisation des catalyseurs NiMoP1 et NiMoP2 conformes à l'invention conduisent donc de manière très sélective à la formation de plus de 90% poids d'hydrocarbures (C14 à C24) ayant un nombre d'atomes de carbone pair et à moins de 10 % poids d'hydrocarbures (C15-C23) ayant un nombre d'atomes de carbone impair.

Ainsi, les catalyseurs NiMoP1 et NiMoP2 conformes à l'invention, c'est à dire présentant un rapport atomique Ni/Mo strictement supérieur à 0 et inférieur à 0,095 permettent non seulement une désoxygénation totale (Rendement en produits désoxygénés = 100%) mais permettent également de maintenir une sélectivité de réaction pour les réactions d'hydrodésoxygénation élevée (respectivement une sélectivité, c'est à dire une conversion de la charge par hydrodéoxygénation de 96,8% et de 92,8% pour NiMoP1 et NiMoP2) et ainsi de limiter la conversion de la charge par décarboxylation/décarbonylation, c'est à dire une sélectivité de réaction pour les réactions de décarboxylation/décarbonylation, à 3,2% et 7,2% respectivement pour NiMoP1 et NiMoP2.

Ceci implique donc d'une part la production de paraffines à nombre de carbones plus élevé et d'autre part une limitation très forte de la formation d'oxydes de carbone (CO et CO2).

Les rendements massiques indiqués sont obtenus par analyse chromatographique en phase gazeuse des effluents liquides de réaction valorisable en carburant, de manière connue de l'homme du métier.

### Séparation de l'effluent issu de l'étape d'hydrodésoxygénation.

La totalité de l'effluent hydrotraité issu du procédé d'hydrodésoxygénation selon l'invention est séparée de manière à récupérer les gaz riches en hydrogène et une base gazole liquide.

### Hydroisomérisation de l'effluent hydrodésoxygéné issu de l'étape de séparation sur un catalyseur d'hydroisomérisation

Le catalyseur d'hydroisomérisation est un catalyseur contenant un métal noble et une zéolithe 10 MR monodimensionnelle ZBM-30. Ce catalyseur est obtenu selon le mode opératoire décrit ci-après. La zéolithe ZBM-30 est synthétisée selon le brevet BASF EP-A-46504 avec le structurant organique triéthylènetétramine. La zéolithe ZBM-30 brute de synthèse est soumise à une calcination à 550 °C sous flux d'air sec durant 12 heures. La zéolithe H-ZBM-30 (forme acide) ainsi obtenue possède un rapport Si/AI de 45. La zéolithe est malaxée avec un gel d'alumine de type SB3 fourni par la société Condéa-Sasol. La pâte malaxée est alors extrudée au travers d'une filière de diamètre 1.4 mm. Les extrudés ainsi obtenus sont calcinés à 500 °C durant 2 heures sous air. La teneur pondérale H-ZBM-30 est de 20 % poids. Ensuite, les extrudés de support sont soumis à une étape d'imprégnation à sec par une solution aqueuse du sel de platine Pt(NH₃)₄²⁺, 2OH-, ils subissent ensuite une étape de maturation en maturateur à eau durant 24 heures à température ambiante puis calcinés durant deux heures sous air sec en lit traversé à 500°C (rampe de montée en température de 5°C/min). La teneur pondérale en platine du catalyseur fini après calcination est de 0.48%.

L'effluent obtenu après hydrodésoxygénation de l'huile de colza en présence du catalyseur NiMoP1 (conforme à l'invention) est hydroisomérisé à hydrogène perdu (c'est à dire non recyclé) sur le catalyseur C1 dans un réacteur d'hydroisomérisation dans les conditions opératoires ci-dessous:
- WH (volume de charge 1 volume de catalyseur / heure) = 1 h⁻¹
- pression totale de travail: 50 bar
- rapport hydrogène / charge: 700 normaux litres / litre

La température est ajustée de manière à avoir une conversion de la fraction 150°C⁺ en fraction 150°C⁻ inférieure à 5% en poids lors de l'hydroisomérisation. Avant test, le catalyseur subit une étape de réduction dans les conditions opératoires suivantes:
- débit d'hydrogène: 1600 normaux litres par heure et par litre de catalyseur
- montée de température ambiante 120°C: 10 °C/min
- palier d'une heure à 120°C
- montée de 120°C à 450°C à 5°C/min
- palier de deux heures à 450°C
- pression : 1 bar

L'effluent hydroisomérisé est ensuite caractérisé. Les rendements et les propriétés carburant sont reportés dans le Tableau 3.

**Tableau 3**

| *Rendement (%pds)* | Caractéristiques du produit (T = 350°C, P = 50 bar, H₂/HC = 700 NUL) |
|---|---|
| Rendement coupe C₁-C₇ [%poids] | 3 |
| Rendement coupe 150°C - [%poids] | 15 |
| Rendement coupe 150°C + (Diesel) [%poids] | 85 |
| *Indice de cétane* (ASTMD613) | 75 |
| *Température limite de filtrabilité (°C)* | -15 |

Le procédé selon l'invention permet donc l'obtention de base gazole d'excellente qualité correspondant aux spécifications en vigueur.

## Revendications

1. Procédé d'hydrodésoxygénation d'huiles et graisses d'origine végétale ou animale, ou des mélanges de telles charges, contenant des triglycérides et/ou des acides gras, ou d'huiles d'algues ou de poisson, avec conversion par décarboxylation/décarbonylation limitée à au plus 10%, mettant en oeuvre un catalyseur massique ou supporté comprenant une phase active constituée d'au moins un élément du groupe VIBchoisi parmi le molybdène et le tungstène et d'au moins un élément du groupe VIII choisi parmi le nickel et le cobalt, lesdits éléments étant sous forme sulfure et le rapport atomique du métal (ou métaux) du groupe VIII sur métal (ou métaux) du groupe VIB, étant strictement supérieur à 0 et inférieur à 0,095, ledit procédé étant mis en oeuvre à une température comprise entre 120 et 450°C, à une pression comprise entre 1 MPa et 10 MPa, à une vitesse spatiale horaire comprise entre 0,1 h⁻¹ et 10 h⁻¹ et en présence d'une quantité totale d'hydrogène mélangée à la charge telle que le ratio hydrogène/charge soit compris entre 50 et 3000 Nm³ d'hydrogène/m³ de charge.

2. Procédé selon la revendication 1 dans lequel la phase active dudit catalyseur est constituée d'au moins un élément du groupe VIB, ledit élément du groupe VIB étant le molybdène et d'au moins un élément du groupe VIII, ledit élément du groupe VIII étant le nickel.

3. Procédé selon l'une des revendications 1 ou 2 dans lequel le rapport atomique du métal (ou métaux) du groupe VIII sur métal (ou métaux) du groupe VIB est compris entre 0,01 et 0,08.

4. Procédé selon la revendication 3 dans lequel le rapport atomique du métal (ou métaux) du groupe VIII sur métal (ou métaux) du groupe VIB est compris entre 0,01 et 0,05.

5. Procédé selon la revendication 4 dans lequel le rapport atomique du métal (ou métaux) du groupe VIII sur métal (ou métaux) du groupe VIB est compris entre 0,01 et 0,03.

6. Procédé selon l'une des revendications 1 à 5 dans lequel, le rapport atomique Ni/Mo est compris 0,01 et 0,03.

7. Procédé selon l'une des revendications 1 à 6 dans lequel la teneur en oxyde d'élément du groupe VIB est comprise entre 1 % et 30 % poids par rapport à la masse totale du catalyseur et la teneur en oxyde d'élément du groupe VIII est strictement supérieure à 0 % et inférieure à 1,5 %poids d'oxyde par rapport à la masse totale du catalyseur.

8. Procédé selon l'une des revendications 1 à 7 dans lequel ledit catalyseur contient une teneur en phosphore strictement supérieure à 1 % et inférieure à 8 % poids d'oxyde P₂O₅ par rapport à la masse totale du catalyseur.

9. Procédé selon l'une des revendications 1 à 8 dans lequel la conversion par décarboxylation/décarbonylation de la charge issue de sources renouvelables est limitée à au plus 4%.

10. Procédé selon une des revendications 1 ou 9 dans lequel ledit procédé est mis en oeuvre en lit fixe.

11. Procédé selon l'une des revendications 1 ou 9 dans lequel ledit procédé est mis en oeuvre en lit bouillonnant.

12. Procédé selon l'une des revendications 1 à 11 dans lequel l'effluent issu de l'hydrodésoxygénation est soumis à au moins une étape de séparation et de préférence une étape de séparation gaz/liquide et de séparation de l'eau et d'au moins une base hydrocarbonée liquide.

13. Procédé selon la revendication 12 dans lequel une étape d'élimination des composés azotés de ladite base hydrocarbonée liquide est mise en oeuvre après ladite étape optionnelle de séparation de l'eau.

14. Procédé selon l'une des revendications 1 à 13 dans lequel une partie au moins de la base hydrocarbonée liquide obtenue à l'issu de l'étape d'élimination des composés organiques azotés est hydroisomérisée en présence d'un catalyseur d'hydroisomérisation.

15. Procédé selon l'une des revendications 1 à 14 dans lequel ledit catalyseur d'hydroisomérisation comprend une phase active métallique constituée de platine et une fonction hydroisomérisante à base de ZBM-30.

## Claims

1. A process for hydrodeoxygenation of oils and fats of vegetable or animal origin, or mixtures of such feeds, containing triglycerides and/or fatty acids, or fish or algae oils, with conversion by decarboxylation/decarbonylation limited to at most 10%, using a bulk or supported catalyst comprising an active phase constituted by at least one element from group VIB, chosen among molybdenum and tungsten, and at least one element from group VIII, chosen among nickel and cobalt, said elements being in the sulphide form, and the atomic ratio of the metal (or metals) from group VIII to the metal (or metals) from group VIB being strictly more than 0 and less than 0.095, said process being carried out at a temperature in the range 120°C to 450°C, at a pressure in the range 1 MPa to 10 MPa, at an hourly space velocity in the range 0.1 h⁻¹ to 10 h⁻¹, and in the presence of a total quantity of hydrogen mixed with the feed such that the hydrogen/feed ratio is in the range 50 to 3000 Nm³ of hydrogen/m³ of feed.

2. A process according to claim 1, in which the active phase of said catalyst is constituted by at least one element from group VIB, said element from group VIB being molybdenum, and at least one element from group VIII, said element from group VIII being nickel.

3. A process according to claim 1 or claim 2, in which the atomic ratio of the metal (or metals) from group VIII to the metal (or metals) from group VIB is in the range 0.01 to 0.08.

4. A process according to claim 3, in which the atomic ratio of the metal (or metals) from group VIII to the metal (or metals) from group VIB is in the range 0.01 to 0.05.

5. A process according to claim 4, in which the atomic ratio of the metal (or metals) from group VIII to the metal (or metals) from group VIB is in the range 0.01 to 0.03.

6. A process according to one of claims 1 to 5, in which the atomic ratio Ni/Mo is in the range 0.01 to 0.03.

7. A process according to one of claims 1 to 6; in which the quantity of oxide of the element from group VIB is in the range 1% to 30% by weight with respect to the total catalyst mass and the quantity of oxide of the element from group VIII is strictly more than 0% and less than 1.5% by weight of oxide with respect to the total catalyst mass.

8. A process according to one of claims 1 to 7, in which said catalyst contains a quantity of phosphorus which is strictly more than 1% and less than 8% by weight of oxide P₂O₅ with respect to the total catalyst mass.

9. A process according to one of claims 1 to 8, in which the conversion by decarboxylation/decarbonylation of the feed derived from renewable sources is limited to at most 4%.

10. A process according to one of claims 1 or 9, in which said process is carried out in a fixed bed.

11. A process according to one of claims 1 or 9, in which said process is carried out in an ebullated bed.

12. A process according to one of claims 1 to 11, in which the effluent from hydrodeoxygenation undergoes at least one separation step, preferably a step for gas/liquid separation and for the separation of water and at least one liquid hydrocarbon base.

13. A process according to claim 12, in which a step for eliminating nitrogen-containing compounds from said liquid hydrocarbon base is carried out after said optional step for separating water.

14. A process according to one of claims 1 to 13, in which at least a portion of the liquid hydrocarbon base obtained from the step for eliminating organic nitrogen-containing compounds is hydroisomerized in the presence of a hydroisomerization catalyst.

15. A process according to one of claims 1 to 14, in which said hydroisomerization catalyst comprises a metallic active phase constituted by platinum and a hydroisomerizing function based on ZBM-30.

## Patentansprüche

1. Verfahren zur Hydrodesoxygenierung von Ölen und Fetten pflanzlichen oder tierischen Ursprungs oder von Gemischen solcher Beschickungen, die Triglyceride und/oder Fettsäuren enthalten, oder von Algen- oder Fischölen, wobei die Umwandlung durch Decarboxylierung/Decarbonylierung auf höchstens 10 % begrenzt ist, wobei ein Vollkatalysator oder ein Trägerkatalysator eingesetzt wird, der eine aktive Phase umfasst, die mindestens aus einem Element der Gruppe VIB, ausgewählt aus Molybdän und Wolfram, und aus mindestens einem Element der Gruppe VIII, ausgewählt aus Nickel und Cobalt, besteht, wobei die Elemente in Form von Schwefelverbindungen vorliegen und das Atomverhältnis des Metalls (oder der Metalle) der Gruppe VIII zum Metall (oder zu den Metallen) der Gruppe VIB exakt größer als 0 und kleiner als 0,095 ist, wobei das Verfahren bei einer Temperatur im Bereich zwischen 120 und 450 °C, bei einem Druck im Bereich zwischen 1 MPa und 10 MPa, bei einer Raumgeschwindigkeit pro Stunde im Bereich zwischen 0,1 h⁻¹ und 10h⁻¹ und in Gegenwart einer Gesamtwasserstoffmenge durchgeführt wird, die mit der Beschickung so gemischt ist, dass das Verhältnis Wasserstoff/Beschickung im Bereich zwischen 50 und 3000 Nm³ Wasserstoff/m³ Beschickung liegt.

2. Verfahren nach Anspruch 1, wobei die aktive Phase des Katalysators aus mindestens einem Element der Gruppe VIB, wobei das Element der Gruppe VIB Molybdän ist, und mindestens einem Element der Gruppe VIII besteht, wobei das Element der Gruppe VIII Nickel ist.

3. Verfahren nach einem der Ansprüche 1 oder 2, wobei das Atomverhältnis des Metalls (oder der Metalle) der Gruppe VIII zum Metall (oder den Metallen) der Gruppe VIB im Bereich zwischen 0,01 und 0,08 liegt.

4. Verfahren nach Anspruch 3, wobei das Atomverhältnis des Metalls (oder der Metalle) der Gruppe VIII zum Metall (oder den Metallen) der Gruppe VIB im Bereich zwischen 0,01 und 0,05 liegt.

5. Verfahren nach Anspruch 4, wobei das Atomverhältnis des Metalls (oder der Metalle) der Gruppe VIII zum Metall (oder den Metallen) der Gruppe VIB im Bereich zwischen 0,01 und 0,03 liegt.

6. Verfahren nach einem der Ansprüche 1 bis 5, wobei das Atomverhältnis Ni/Mo im Bereich zwischen 0,01 und 0,03 liegt.

7. Verfahren nach einem der Ansprüche 1 bis 6, wobei der Oxidgehalt des Elements der Gruppe VIB im Bereich zwischen 1 Gew.-% und 30 Gew.-% liegt, bezogen auf die Gesamtmasse des Katalysators, und der Oxidgehalt des Elements der Gruppe VIII exakt größer als 0 Gew.-% und kleiner als 1,5 Gew.-% Oxid ist, bezogen auf die Gesamtmasse des Katalysators.

8. Verfahren nach einem der Ansprüche 1 bis 7, wobei der Katalysator einen Phosphorgehalt enthält, der exakt größer als 1 Gew.-% und kleiner als 8 Gew.-% Oxid P₂O₅ ist, bezogen auf die Gesamtmasse des Katalysators.

9. Verfahren nach einem der Ansprüche 1 bis 8, wobei die Umwandlung durch Decarboxylierung/Decarbonylierung der Beschickung aus erneuerbaren Quellen auf höchstens 4 % begrenzt ist.

10. Verfahren nach einem der Ansprüche 1 oder 9, wobei das Verfahren im Festbett durchgeführt wird.

11. Verfahren nach einem der Ansprüche 1 oder 9, wobei das Verfahren in wallenden Bett durchgeführt wird.

12. Verfahren nach einem der Ansprüche 1 bis 11, wobei der Abfluss aus der Hydrodesoxygenierung mindestens einem Schritt zur Trennung und bevorzugt einem Schritt zur Trennung von Gas und Flüssigkeit und zur Trennung von Wasser und mindestens einem flüssigen Kohlenwasserstoffgrundstoff unterzogen wird.

13. Verfahren nach Anspruch 12, wobei ein Schritt zur Entfernung der schwefelhaltigen Verbindungen des flüssigen Kohlenwasserstoffgrundstoffs nach dem optionalen Schritt der Trennung von Wasser durchgeführt wird.

14. Verfahren nach einem der Ansprüche 1 bis 13, wobei mindestens ein Teil des flüssigen Kohlenwasserstoffgrundstoffs, der am Ende des Schritts zur Entfernung der organischen stickstoffhaltigen Verbindungen erhalten wird, in Gegenwart eines Hydroisomerisationskatalysators hydroisomerisiert wird.

15. Verfahren nach einem der Ansprüche 1 bis 14, wobei der Hydroisomerisationskatalysator eine aktive metallische Phase umfasst, die aus Platin und einer hydroisomerisierenden Funktion auf der Basis von ZBM-30 besteht.
